# FASCICULE DE BREVET EUROPEEN

(11) **EP 3 300 827 B1**
(45) Date de publication et mention de la délivrance du brevet: **16.06.2021**
(21) Numéro de dépôt: 17194350.9
(22) Date de dépôt: 02.10.2017
(51) Int. Cl.: B23K 9/32, B08B 15/04, F23D 14/46, B23K 5/22

(54) **TORCHE DE SOUDAGE TIG DOTEE D'UN DISPOSITIF D'ASPIRATION DE FUMEES**
WIG-SCHWEISSBRENNER MIT EINER VORRICHTUNG ZUR RAUCHANSAUGUNG
TIG WELDING TORCH PROVIDED WITH A FUME-SUCTION DEVICE

(30) Priorité: 03.10.2016 FR 1659496
(43) Date de publication de la demande: 04.04.2018
(73) Titulaire: Starwelding Torches, 37310 Reignac-sur-Indre (FR)
(72) Inventeur: DABERT, Jean Michel, 37310 REIGNAC SUR INDRE (FR)
(74) Mandataire: Aquinov

(56) Documents cités:
- EP-A1- 2 298 485
- DE-U1- 7 738 617
- US-B1- 6 244 519

## Description

L'invention concerne un dispositif d'aspiration des fumées pour une torche de soudage TIG (pour l'acronyme anglais de « Tungsten Inert Gas »), comme montré dans le préambule de la revendication 1 (voir, par exemple document US 6 244 519 B1), ainsi qu'une torche de soudage TIG comprenant un tel dispositif.

L'invention a pour but de fournir un dispositif directement intégré lors de la fabrication de nouvelles torches de soudage TIG.

Le soudage TIG utilise lors de la soudure un gaz de protection tel que l'argon qui est diffusé autour de l'électrode et sur la soudure et permet d'éviter l'oxydation instantanée de la soudure lors de la fusion du métal soudé.

Les émanations de fumées se dégageant lors de la soudure ainsi que les dégagements de particules lourdes telles que de nickel, chrome, oxydes de bérylium et de cadmium, sont nocives pour le soudeur et nécessitent leur évacuation pour assurer un environnement de travail sain et respecter la réglementation du code du travail.

Des systèmes de hottes aspirantes existent mais ne conviennent pas pour des postes portatifs de soudure.

En outre, l'aspiration des fumées n'est réellement efficace que lorsqu'elles sont captées à la source, c'est-à-dire au plus proche de la soudure. A cette fin, des dispositifs d'aspiration sont connus associés à une torche de soudure MIG ou à une torche de robot comme ceux proposés dans le document EP2298485. Cependant, de tels dispositifs sont dédiés à des postes de soudure MIG ou des robots et ne conviennent pas pour des torches TIG dont le gaz de protection indispensable pour la soudure serait sinon en très grande partie aspiré par le dispositif d'aspiration. En effet, le débit de gaz de protection d'une torche MIG est de l'ordre de 15 à 20L/minute, ce qui autorise d'associer un dispositif d'aspiration proche du point de soudure, car si une partie du gaz de protection est aspiré, il en reste suffisamment pour protéger la soudure. En revanche, pour une torche TIG, le débit du gaz de protection est de l'ordre de 5 à 10 L/minute. Aussi, il est aujourd'hui inconcevable d'associer un dispositif d'aspiration sur la tête d'une torche TIG, ce dispositif aspirerait le gaz de protection.

Or la Demanderesse, contre toute attente, est parvenue à proposer selon l'invention un dispositif dédié à l'aspiration des fumées et autres particules nocives de soudage pour une torche de soudure TIG, qui ne présente pas les inconvénients précités, en aspirant efficacement les émanations nocives lors du soudage par le procédé TIG sans risque d'aspirer le gaz de protection.

Le dispositif de l'invention dédié à l'aspiration des fumées et autres particules nocives de soudage est dénommé par commodité, dispositif d'aspiration. Toutefois, le dispositif de l'invention considéré isolément n'est pas un dispositif d'aspiration en tant que tel lorsqu'il n'est pas mis en œuvre en étant relié à un système d'aspiration. Le dispositif d'aspiration de l'invention est destiné à canaliser et acheminer les fumées vers un système d'aspiration.

L'invention porte sur une torche de soudage TIG selon la revendication 1.

Une torche de soudage TIG comporte de manière connue un corps de torche, une buse en saillie de la partie aval du corps de torche, et une électrode longiligne logée dans de la buse et sortant hors de celle-ci.

Ainsi, le dispositif d'aspiration de l'invention est associé à un corps de torche de soudage (au niveau de la partie aval du corps de torche comprenant l'électrode), en coiffant la buse de soudage de la torche sans dépasser de l'extrémité libre de la buse de soudage, et en particulier en gardant une distance de séparation entre l'extrémité libre de la buse de soudage et l'extrémité libre de l'extension du dispositif. Cette distance de séparation est selon l'invention adaptée.

En position d'utilisation du dispositif d'aspiration sur une torche de soudage TIG, l'extension est destinée à ménager avec la buse de la torche un volume vide annulaire dans lequel sont destinées à être aspirées les fumées, la longueur de l'extension étant adaptée par rapport à la longueur de la buse en saillie.

Ainsi, le dispositif d'aspiration procure grâce à l'extension une enveloppe autour et à distance de la buse de la torche de soudage, l'aspiration se faisant au niveau de l'espace de séparation de la buse et de l'extension et d'une couronne annulaire se formant autour du faisceau du gaz de protection sortant de la buse, évitant tout risque d'aspirer le gaz.

En outre, le dispositif d'aspiration assure sa fonction tout en étant peu encombrant.

Par ailleurs, l'extension peut former une bague amovible rapportée sur le corps du dispositif d'aspiration (apte à être fixée au niveau de l'ouverture d'extrémité du corps, notamment par vissage ou clipsage ou emboîtement) ; l'amovibilité de la bague d'extension permet en ôtant la bague hors utilisation de la torche de soudage et sans démonter l'ensemble du dispositif d'aspiration, d'avoir accès à la buse de la torche de soudage ; la buse étant démontable, il est alors aisé d'accéder aux éléments constitutifs de la torche de soudage pour leur entretien ou remplacement, tels que le diffuseur du gaz de protection ou l'électrode de la torche.

Selon une caractéristique, l'extension est creuse et cylindrique, de préférence de section intérieure circulaire, et présente une paroi pleine.

L'extension, en position d'utilisation dudit dispositif sur la torche de soudage qui présente une buse, est destinée à entourer la buse de la torche et à ménager avec ladite buse un volume vide annulaire dans lequel sont destinées à être aspirées les fumées, de préférence la distance radiale séparant la paroi extérieure de la buse de la paroi intérieure de la bague est de l'ordre de 4 à 8 mm, de préférence de 5 mm ou entre 5 et 7 mm.

Selon une autre caractéristique, l'extension présente une longueur adaptée telle qu'en position d'utilisation du dispositif, l'extrémité libre l'extension opposée au corps du dispositif ne dépasse pas de l'extrémité libre de la buse de la torche de soudage, en particulier la distance séparant les extrémités libres respectives de l'extension et de la buse est compris entre 8 et 15 mm, de préférence de l'ordre de 12 mm, ou de préférence de 13 mm.

Selon une autre caractéristique, l'extrémité distale de l'extension présente une surface périphérique externe qui est biseautée en convergeant depuis le corps 20 jusqu'à l'extrémité libre de l'extension (c'est-à-dire en convergeant vers la buse). Avantageusement, cette caractéristique permet notamment de ménager un espace de confort visuel pour l'utilisateur/le soudeur qui voit ainsi sans gêne la zone de soudure sur laquelle il intervient.

L"extension est en un matériau résistant à la chaleur, en particulier métallique ou en polytétrafluoréthylène (PTFE ou encore connu sous le nom Téflon®).

Lorsque l'extension est une bague amovible, le dispositif peut comprendre un jeu de plusieurs bagues d'extension interchangeables et de longueur chacune différente. Ainsi, en fonction de la longueur de la buse de la torche de soudage, il sera aisé d'y associer la bague d'extension de longueur ad hoc afin d'aspirer de manière optimale sans perturber le gaz de protection.

Avantageusement, le corps est en un matériau isolant électrique et résistant à la chaleur, en particulier à une température de l'ordre de celle de soudage telle que de l'ordre d'au moins 200°C, notamment le corps étant en polytétrafluoréthylène (PTFE) ou un phénoplaste du type Bakélite ou Céleron.

Le corps et son extension sont de préférence en PTFE.

Selon encore une autre caractéristique, le dispositif d'aspiration comporte des moyens d'acheminement des fumées et/ou particules reliés à au moins la sortie d'échappement, notamment les moyens d'acheminement comportant au moins une conduite, de préférence deux conduites se rencontrant après une certaine longueur pour ne former qu'une unique conduite terminale destinée à être connectée à un système d'aspiration, au moins une partie des moyens d'acheminement étant destinée à être intégrée dans une gaine correspondant au faisceau d'alimentation en électricité et en gaz de la torche à laquelle est destiné ledit dispositif.

La présence de deux conduites en sortie du corps du dispositif d'aspiration, au moins sur une certaine longueur présente certains avantages. En effet, agencer en sortie deux conduites plutôt qu'une seule conduite, permet de réduire la section de chacune des conduites. On gagne en encombrement. De plus, une telle configuration procure une flexibilité du dispositif pour sa manipulation. Par ailleurs, la présence de deux conduites assure une augmentation de la vitesse d'aspiration.

Dans un mode de réalisation particulier, le dispositif d'aspiration comporte deux sorties d'échappement, de préférence de section de l'ordre de 5 à 10 mm de diamètre, en particulier de 6 mm. La torche de soudage TIG/le dispositif d'aspiration comporte des moyens d'acheminement comprenant deux tuyaux , de section de l'ordre de 5 à 10 mm raccordés respectivement aux deux sorties d'échappement (de préférence via des tétines en laiton entre 1 et 3 cm de long fixées aux dites sorties par exemple par vissage), en particulier les deux tuyaux étant en un matériau résistant à la chaleur tel qu'en silicone et/ou caoutchouc et s'étendant sur une longueur de l'ordre de 0 5 à 1,5 m, de préférence les deux tuyaux se rejoignant en un seul tuyau terminal de section de l'ordre de 10 à 12 mm.

On peut concevoir le dispositif d'aspiration tel qu'il soit rapporté de manière amovible sur une torche TIG actuelle bien que les torches TIG actuelles ne soient nullement prévues pour accueillir un dispositif d'aspiration, car jusqu'à présent il était inconcevable de doter une torche TIG d'un système d'aspiration des fumées au plus près du système d'alimentation du gaz de protection. Le corps du dispositif de l'invention pourrait être associé de manière amovible à la tête de torche. Toutefois il est nécessaire d'agencer les conduites et tuyaux d'aspiration de manière ad hoc pour qu'ils s'étendent vers le bas et le corps de torche afin d'être regroupés sans gêner le devant de la tête de torche. Selon une autre caractéristique, le corps du dispositif comporte une ouverture d'extrémité supplémentaire, opposée à l'ouverture associée à l'extension, et présente un trou (décrochement) dans sa paroi en limite de ladite ouverture supplémentaire d'extrémité. Cette configuration d'ouverture d'extrémité agrandie du corps creux (via le décrochement) procure au dispositif d'aspiration sa fonction d'amovibilité. En particulier, le dispositif d'aspiration peut être monté sur une torche de soudage sans outil, par emboîtement ou clipsage.

Lorsque le dispositif d'aspiration est amovible, la fixation par emboîtement du dispositif d'aspiration se fait très légèrement en force. Le retrait est aisé, car bien que le matériau constitutif du corps du dispositif d'aspiration soit rigide, le corps de torche étant dans un matériau souple (légèrement élastique), une torsion manuelle très légère du corps de torche permet de dissocier le dispositif.

Dans la suite de la description, les termes « supérieur » et « inférieur », s'entendent en qualifiant des éléments du dispositif d'aspiration en position associée du dispositif sur une torche de soudage tenue en condition d'utilisation.

On entend par « longueur » au regard de l'extension du corps creux du dispositif d'aspiration, la dimension s'étendant selon l'axe longitudinal de l'électrode de la torche de soudage en position associée du dispositif d'aspiration sur la torche.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue schématique de côté d'une torche usuelle de soudage TIG (sans le dispositif d'aspiration des fumées de l'invention);
- La figure 2 illustre la torche de la figure 1 sur laquelle est monté le dispositif d'aspiration selon un mode de réalisation ;
- La figure 3 illustre une vue en perspective d'une partie du dispositif de la figure 2, sans les moyens d'acheminement des fumées ;
- La figure 4 montre en vue de dessus, le dessous du dispositif d'aspiration des figures 2 et 3, sans les moyens d'acheminement des fumées ;
- La figure 5 est une vue éclatée selon une variante de réalisation d'une partie du dispositif de l'invention, sans les moyens d'acheminement des fumées ;
- La figure 6 est une vue schématique de côté de la torche et du dispositif de la figure 2 relié à un système d'aspiration des fumées ;
- La figure 7 est une vue schématique en coupe transversale du dispositif de l'invention avec les moyens d'acheminement des fumées.

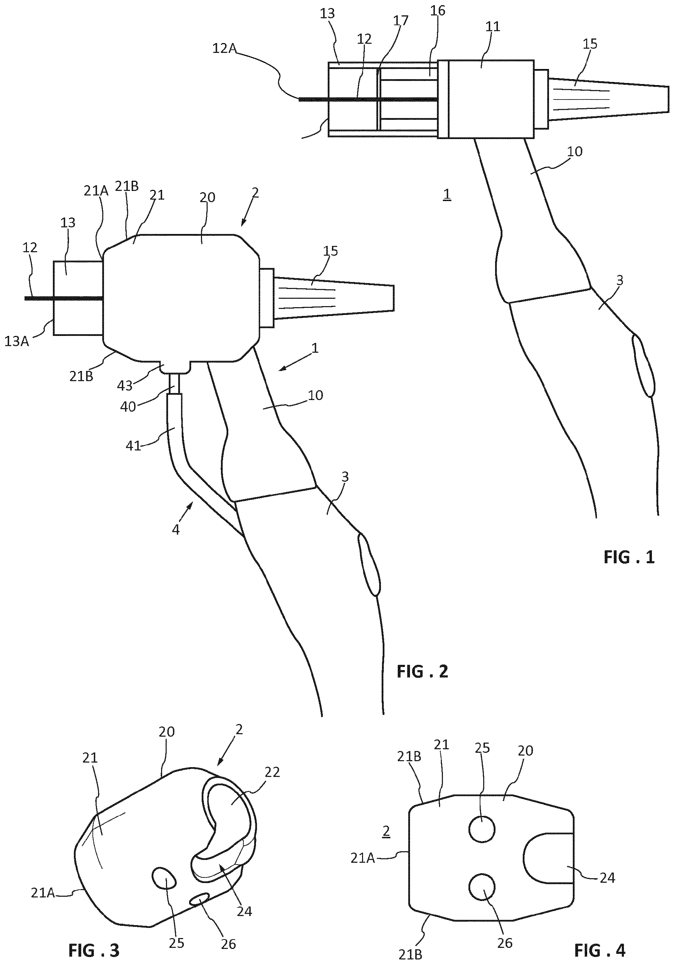

La figure 1 illustre une torche de soudage 1 TIG usuelle. La torche de soudage 1 ci-après décrite est utilisée pour le soudage TIG.

Le dispositif d'aspiration 2 illustré sur les figures 2 et suivantes permet d'aider à l'aspiration des fumées et/ou particules nocives émanant du soudage lors de l'utilisation de la torche de soudage TIG de la figure 1.

La torche de soudage 1 comprend usuellement un corps de torche 10 surmontée d'une tête de torche 11, une électrode longitudinale 12 traversant de part en part la tête de torche et d'extrémité libre 12A dédié au soudage, une buse cylindrique 13 (par exemple en céramique ou ici en verre thermostable du type Pyrex® en étant ainsi transparente) associée à la tête de torche 11 et entourant à distance l'électrode 12, ladite électrode faisant saillie hors de l'extrémité distale 13A de la buse 13, et une extrémité distale fermée 15, dénommée habituellement « bouchon » ou « coiffe », qui est opposée à la buse 13 et loge l'extrémité non visible de l'électrode 12.

De plus, des pièces internes sont logées dans la tête de torche 11 et dans la buse 13, telles qu'un adaptateur 16 constituant une pièce d'interface de fixation entre la buse 13 et la tête de torche 11 pour fixer la buse, ainsi qu'un diffuseur 17 formant un disque perforé agencé à l'intérieur de la buse et porté par l'adaptateur 16, le diffuseur servant à délivrer le gaz inerte de manière homogène autour de l'électrode 12 et donc de la soudure lors de la mise en œuvre de la torche.

Les éléments constitutifs précités de la torche de soudage sont avantageusement démontables.

Le corps de torche 10 est relié à une gaine flexible 3 (aussi nommée habituellement faisceau de torche) logeant les câbles d'alimentation électrique et l'alimentation du gaz protecteur inerte du type argon.

Le dispositif d'aspiration 2 est conçu pour être associé si besoin de manière amovible à la torche 1, afin d'être monté sur une torche TIG déjà existante. De préférence, le dispositif d'aspiration 2 est rendu solidaire de la tête de torche 11 lors de la fabrication de la torche TIG et forme avec celle-ci un ensemble monobloc.

Le dispositif d'aspiration 2 comporte un corps cylindrique creux 20 dont l'intérieur est de préférence à section circulaire, une extension 21 fixée de manière amovible ou non sur le corps cylindrique 20. Le corps cylindrique 20 présente deux ouvertures opposées d'extrémité 22 et 23, l'ouverture d'extrémité 23 étant adaptée pour la fixation de l'extension 21.

Le dispositif d'aspiration 2 illustré est ici amovible. Son montage sur la tête de torche 11 est possible grâce d'une part à l'ouverture d'extrémité 22 opposée à la bague 21, et d'autre part à un trou 24 débouchant sur ladite ouverture d'extrémité. En effet, le corps cylindrique 20 comporte depuis l'ouverture d'extrémité 22 et suivant un arc de cercle de l'ordre de 30 à 45°, un décrochement ménageant ainsi le trou 24 dans l'épaisseur de la paroi, s'étendant sur une longueur de l'ordre du tiers de la longueur du corps cylindrique.

Le corps 20 du dispositif d'aspiration 2 est fait d'un matériau isolant électrique qui en outre est résistant à la chaleur, par exemple en PTFE connu aussi sous la dénomination Teflon®. Bien que le matériau constitutif du corps 20 soit rigide, le dispositif d'aspiration 2 est apte à être monté et démonté aisément de la tête de torche 11 (et cela sans outil) grâce à l'ouverture d'extrémité 22 et au trou/décrochement 24, ainsi qu'en raison du matériau relativement flexible de la tête de torche.

Par ailleurs, le dispositif d'aspiration 2 comporte au moins un orifice d'échappement 25, de préférence deux orifices d'échappement 25 et 26 disposés dans la partie proximale du corps 20 et dans la partie inférieure du corps en position montée du dispositif. En regard des figures 2 à 6, les orifices 25 et 26 forment des sorties d'évacuation des fumées entrant dans le corps creux 20 depuis l'extension 21 et destinées à être évacuées via lesdits orifices jusqu'à des moyens d'acheminement 4 connectés d'une part auxdits orifices 25, 26, et d'autre part à un système d'aspiration 5.

Le dispositif d'aspiration 2 est associé au corps de torche 10 par engagement parallèlement et autour de la buse 13 de la torche, puis par emboîtement et à force sur la tête de torche 11, de sorte qu'une fois monté sur la tête de torche, le dispositif d'aspiration est étanche au niveau de l'ouverture d'extrémité 22 et du décrochement 24. Ainsi, les fumées aspirées depuis l'extension 21 cheminent nécessairement via les orifices d'échappement 25 et 26.

L'extension 21 peut être métallique. Elle peut être dans un autre matériau résistant à la chaleur tel qu'en PTFE. Elle est à paroi pleine. Elle est cylindrique de préférence de section intérieure circulaire.

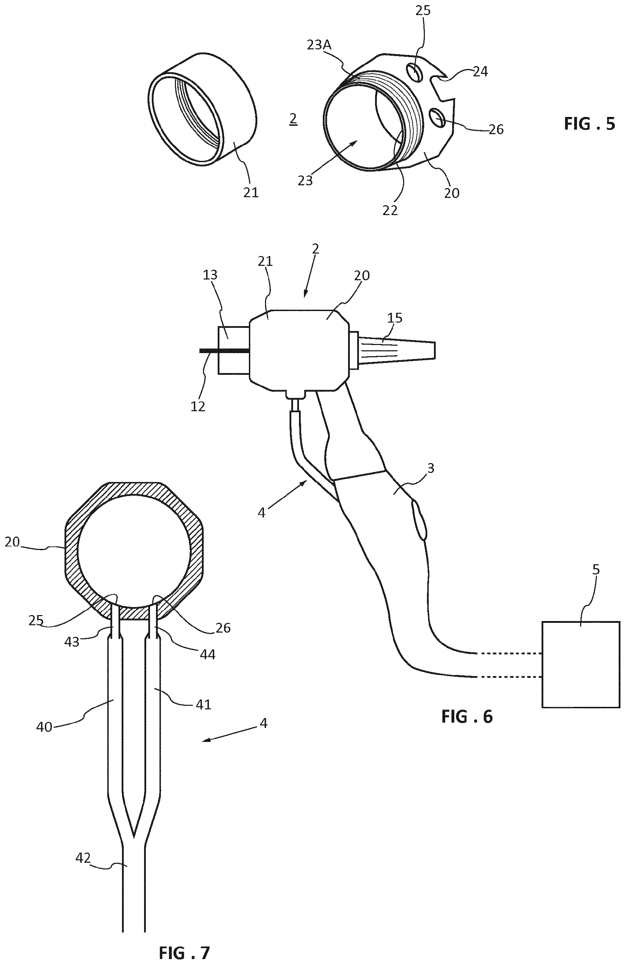

Dans la variante de réalisation de la figure 5, l'extension 21 se présente sous la forme d'une bague amovible par rapport au corps creux 20 afin de pouvoir accéder aux différents éléments constitutifs du corps de torche qui sont démontables si besoin, sans avoir à ôter le dispositif d'aspiration 2.

La bague d'extension 21 est par exemple fixée par vissage au niveau de l'ouverture d'extrémité 23. Telle que visible sur la figure 5, le corps creux présente une filetage extérieur 23A au niveau de l'ouverture d'extrémité 23 destinée à coopérer avec un taraudage agencé à l'intérieur de la bague d'extension 21.

En variante, la bague d'extension 21 peut être fixée autrement tel que par clipsage.

Dans le mode de réalisation préféré de l'invention, illustré sur les figures 2 à 4, l'extension 21 est monobloc avec le corps 20, le dispositif d'aspiration 2 formant un corps unitaire. Le dispositif d'aspiration 2 peut être directement surmoulé sur la tête de torche 11 ou rapporté de manière solidaire par emboitement/clipsage. Sur le dessous du dispositif, sont ménagés les orifices d'échappement 25 et 26, et le décrochement 24 qui coopère avec le corps de torche 10.

Le corps 20 est creux pour être fixé et épouser la tête de torche 11.

L'extension 21 est creuse pour entourer à distance la buse 13. Le dispositif d'aspiration 2 est positionné sur la tête de torche 11 de sorte que la buse 13 est en saillie de l'extension 21.

Selon l'invention, l'extension 21 est agencée autour de la buse 13 et à distance de sa paroi extérieure de sorte à ménager un volume annulaire de vide entre la paroi extérieure de la buse 13 et la paroi intérieure de l'extension 21. L'aspiration des fumées se fait dans ce volume annulaire. L"extension 21 présente un contour intérieur qui suit la forme du contour extérieur de la buse 13 de la torche.

Selon l'invention, la distance radiale séparant la paroi extérieure de la buse 13 de la paroi intérieure de l'extension 21 est de l'ordre de 4 à 8 mm, de préférence de 5 ou 7 mm.

Selon l'invention, l'extension 21 présente une longueur appropriée par rapport à la longueur de la buse 13 de la torche 1 pour assurer efficacement sa fonction d'aspiration des fumées tout en évitant tout risque d'aspiration du gaz protecteur délivré par la torche de soudage.

Par conséquent, selon l'invention, la distance séparant l'extrémité libre 13A de la buse (en saillie de l'extension 21) de l'extrémité libre 21A de l'extension possède une valeur adaptée de sorte à engendrer une aspiration optimale des fumées toxiques sans aspirer le gaz de protection.

Avantageusement, cette distance est la même quel que soit le diamètre intérieur des têtes de torche TIG (quel que soit l'intensité du courant de soudage). En effet il existe des torches TIG de diamètre 20 mm (courant de soudage de maximum 250 A) ou 23 mm (courant de soudage de 350 A).

Ainsi, en regard de la figure 2 et selon l'invention, la distance séparant l'extrémité libre 13A de la buse 13, de l'extrémité libre 21A de l'extension est de l'ordre de 8 à 15 mm, de préférence de 12 mm ou 13 mm.

En fonction du type de buse 13 de soudage, la longueur de la buse sera différente. Selon l'invention, la distance séparant la buse séparant l'extrémité libre 13A de la buse 13, de l'extrémité libre 21A de l'extension sera toujours la même (comprise entre 8 et 15 mm). Soit la torche TIG est vendue avec une longueur de buse invariable, le dispositif d'aspiration 2 est alors monobloc. Soit, la torche TIG est vendue avec une longueur de buse qui est variable ; le dispositif d'aspiration 2 sera de préférence avec une extension 21 à bague amovible, la longueur de la bague d'extension étant variable. De préférence, il est alors prévu un jeu de plusieurs bagues interchangeables et de longueur chacune différente.

A titre d'exemples dimensionnels nullement limitatifs relatif à dispositif d'aspiration de l'invention à bague amovible : la longueur du corps 20 est de l'ordre de 35 mm, la longueur de la bague d'extension est de l'ordre de 15 mm, et la section circulaire intérieure de la bague et du corps creux est de l'ordre de 23 mm.

Par ailleurs, dans le mode de réalisation préféré de l'invention, illustré sur les figures 2 à 4, l'extrémité distale de l'extension 21 présente une surface périphérique externe 21B qui est biseautée en convergeant depuis le corps 20 jusqu'à son extrémité libre 21A (c'est-à-dire en convergeant vers la buse 13). De préférence, la surface 21B est inclinée de l'ordre de 30° par rapport à l'axe longitudinal de la buse/de l'électrode 12.

Enfin, le dispositif d'aspiration 2 comporte les moyens d'acheminement 4 qui connectent les orifices d'échappement 25 et 26 au système d'aspiration 5. Les moyens d'acheminement 4 comportent au moins une conduite destinée à être connectée au système d'aspiration 5.

Le système d'aspiration 5 est un système d'aspiration en soi connu pourvu de filtres adaptés et pouvant notamment aspirer selon un débit de 75 à 150 m³/heure.

Dans un exemple de mode de réalisation (figure 7), les moyens d'acheminement 4 comportent deux tuyaux 40 et 41 dans un matériau résistant à la chaleur, par exemple en silicone de section de l'ordre de 5 à 10 mm, les deux tuyaux se rejoignant en un tuyau terminal 42, de préférence en polyuréthane (PU), destiné à être relié au système d'aspiration 5.

Avantageusement, la paire de tuyaux 40 et 41 s'étend sur une longueur de l'ordre entre 50 cm et 1,5 m.

De préférence, l'ensemble des tuyaux est logé dans une gaine constituant le faisceau d'alimentation 3 de la torche.

Les orifices d'échappement 25 et 26 sont taraudés dans l'épaisseur de la paroi du corps 20 pour y fixer par exemple par vissage deux tétines 43 et 44 faisant saillie hors du corps creux et auxquelles sont raccordés les deux tuyaux 40 et respectivement 41. De préférence, afin de maximiser la quantité de fumées et particules nocives aspirées, le diamètre des orifices d'échappement (et donc le diamètre des tétines) est compris entre 4 et 6 mm.

## Revendications

1. Torche de soudage TIG (1) comportant une tête de torche (11) et une buse de soudage (13) qui possède une extrémité libre (13A), et un dispositif d'aspiration (2) de dégagements de fumées et/ou particules lors du soudage, le dispositif d'aspiration (2) possédant un corps creux (20) qui est rendu solidaire de la tête de torche (11) et présentant une extension (21) dotée d'une ouverture d'extrémité (23) et d'une extrémité libre (21A), l'extension (21) entourant la buse (13) qui fait saillie par rapport à l'extrémité libre (21A) de l'extension, **caractérisée en ce que** l'extension (21) présente une longueur appropriée par rapport à la longueur de la buse (13), telle que la distance séparant ladite extrémité libre (13A) de la buse de l'extrémité libre (21A) de l'extension (21) est comprise entre 8 et 15 mm.

2. Torche de soudage TIG selon la revendication 1, dans laquelle la distance séparant ladite extrémité libre (13A) de la buse de l'extrémité libre (21A) de l'extension (21) est de 12 mm ou 13 mm.

3. Torche de soudage TIG selon la revendication 1 ou 2, dans laquelle la distance radiale séparant la paroi extérieure de la buse (13) de la paroi intérieure de l'extension (21) est comprise entre 4 et 8 mm, de préférence la distance radiale est entre 5 et 7 mm.

4. Torche de soudage TIG selon l'une quelconque des revendications précédentes, dans laquelle l'extension (21) présente sa surface périphérique externe (21B) qui est biseautée en convergeant vers la buse (13).

5. Torche de soudage TIG selon l'une quelconque des revendications précédentes, dans laquelle l'extension (21) forme une bague amovible rapportée sur le corps (20) du dispositif d'aspiration.

6. Torche de soudage TIG selon l'une quelconque des revendications précédentes, dans laquelle l'extension (21) est en un matériau résistant à la chaleur, en particulier métallique ou en polytétrafluoréthylène (PTFE), de préférence l'extension (21) et le corps (20) du dispositif d'aspiration sont en PTFE.

7. Torche de soudage TIG selon l'une quelconque des revendications précédentes, dans laquelle le corps (20) du dispositif d'aspiration est en un matériau isolant électrique et résistant à la chaleur, en particulier à une température de l'ordre de celle de soudage telle que de l'ordre d'au moins 200°C, notamment le corps (20) étant en polytétrafluoréthylène (PTFE) ou un phénoplaste du type Bakélite ou Celeron.

8. Torche de soudage TIG selon l'une quelconque des revendications précédentes, dans laquelle le corps (20) du dispositif d'aspiration comporte au moins une sortie d'échappement (25, 26) agencée à travers la paroi du corps, de préférence deux sorties d'échappement (25, 26), notamment de section de l'ordre de 5 à 10 mm de diamètre, en particulier de 6 mm de diamètre.

9. Torche de soudage TIG selon la revendication précédente, la torche comportant des moyens d'acheminement (4) des fumées et/ou particules reliés à au moins la sortie d'échappement (25), de préférence à deux sorties d'échappement (25, 26), notamment les moyens d'acheminement (4) comportant au moins une conduite (40), de préférence deux conduites (40, 41), en particulier lesdites conduites étant faites en un matériau résistant à la chaleur tel qu'en silicone et/ou caoutchouc, les deux conduites (40, 41) étant raccordées respectivement aux deux sorties d'échappement (25, 26) et se rencontrant après une certaine longueur pour ne former qu'une unique conduite terminale (42) destinée à être connectée à un système d'aspiration (5), au moins une partie des moyens d'acheminement (4) étant destinée à être intégrée dans une gaine correspondant au faisceau d'alimentation en électricité et en gaz de la torche à laquelle est destiné ledit dispositif.

10. Torche de soudage TIG selon la revendication 8 ou 9, dans laquelle la torche comporte des moyens d'acheminement (4) des fumées et/ou particules reliés à deux sorties d'échappement (25, 26), et en ce que le dispositif d'aspiration (2) comporte au moins deux tétines (43, 44) faisant saillie hors du corps (20) dudit dispositif, qui sont connectées respectivement aux deux sorties d'échappement (25, 26).

11. Torche de soudage TIG selon l'une quelconque des revendications précédentes, dans laquelle le dispositif d'aspiration (2) est amovible ou le corps (20) du dispositif d'aspiration forme avec la torche un ensemble monobloc moulé.

## Patentansprüche

1. WIG-Schweißbrenner (1), umfassend einen Brennerkopf (11) und eine Schweißdüse (13), die ein freies Ende (13A) aufweist, und eine Absaugvorrichtung (2) für beim Schweißen freigesetzten Rauch und/oder Partikel, wobei die Absaugvorrichtung (2) einen mit dem Brennerkopf (11) verbundenen Hohlkörper (20) aufweist, der eine Verlängerung (21) mit einer Endöffnung (23) und einem freien Ende (21A) hat, wobei die Verlängerung (21) die Düse (13) umgibt, die von dem freien Ende (21A) der Verlängerung vorsteht, **dadurch gekennzeichnet, dass** die Verlängerung (21) eine geeignete Länge in Bezug auf die Länge der Düse (13) hat, so dass der Abstand, der das freie Ende (13A) der Düse von dem freien Ende (21A) der Verlängerung (21) trennt, zwischen 8 und 15 mm beträgt.

2. WIG-Schweißbrenner nach Anspruch 1, wobei der Abstand zwischen dem freien Ende (13A) der Düse und dem freien Ende (21A) der Verlängerung (21) 12 mm oder 13 mm beträgt.

3. WIG-Schweißbrenner nach Anspruch 1 oder 2, wobei der radiale Abstand zwischen der Außenwand der Düse (13) und der Innenwand der Verlängerung (21) zwischen 4 und 8 mm, vorzugsweise der radiale Abstand zwischen 5 und 7 mm beträgt.

4. WIG-Schweißbrenner nach einem der vorhergehenden Ansprüche, wobei die Verlängerung (21) eine abgeschrägte äußere Umfangsfläche (21B) hat, wenn sie zur Düse (13) hin konvergiert.

5. WIG-Schweißbrenner nach einem der vorhergehenden Ansprüche, wobei die Verlängerung (21) einen abnehmbaren Ring bildet, der an dem Körper (20) der Absaugvorrichtung befestigt ist.

6. WIG-Schweißbrenner nach einem der vorhergehenden Ansprüche, wobei die Verlängerung (21) aus einem hitzebeständigen Material, insbesondere Metall oder Polytetrafluorethylen (PTFE), besteht, wobei die Verlängerung (21) und der Körper (20) der Absaugvorrichtung vorzugsweise aus PTFE hergestellt sind.

7. WIG-Schweißbrenner nach einem der vorhergehenden Ansprüche, bei dem der Körper (20) der Absaugvorrichtung aus einem elektrisch isolierenden und hitzebeständigen Material besteht, insbesondere bei einer Temperatur in der Größenordnung derjenigen des Schweißens, wie in der Größenordnung von mindestens 200 °C, wobei der Körper (20) insbesondere aus Polytetrafluorethylen (PTFE) oder einem Phenoplast vom Typ Bakelit oder Celeron besteht.

8. WIG-Schweißbrenner nach einem der vorhergehenden Ansprüche, wobei der Körper (20) der Absaugvorrichtung mindestens einen durch die Wand des Körpers angeordneten Abgasauslass (25, 26), vorzugsweise zwei Abgasauslässe (25, 26), insbesondere mit einem Querschnitt im Bereich von 5 bis 10 mm Durchmesser, insbesondere 6 mm Durchmesser, umfasst.

9. WIG-Schweißbrenner nach dem vorhergehenden Anspruch, wobei der Brenner Mittel (4) zum Fördern von Rauch und/oder Partikeln umfasst, die mit mindestens einem Abgasauslass (25), vorzugsweise mit zwei Abgasauslässen (25, 26), verbunden sind, wobei die Fördermittel (4) insbesondere mindestens eine Leitung (40), vorzugsweise zwei Leitungen (40, 41), umfassen, wobei die Leitungen insbesondere aus einem hitzebeständigen Material wie Silikon und/oder Gummi hergestellt sind, wobei die beiden Leitungen (40, 41) jeweils mit den beiden Abgasauslässen (25, 26) verbunden sind und sich nach einer bestimmten Länge treffen, um eine einzige Endleitung (42) zu bilden, die für den Anschluss an ein Ansaugsystem (5) bestimmt ist, wobei mindestens ein Teil der Fördermittel (4) dazu bestimmt ist, in eine Hülle integriert zu werden, die dem Strom- und Gasversorgungsbündel des Brenners entspricht, für den die Vorrichtung bestimmt ist.

10. WIG-Schweißbrenner nach Anspruch 8 oder 9, wobei der Brenner Mittel (4) zum Abführen von Rauch und/oder Partikeln umfasst, die mit zwei Abgasauslässen (25, 26) verbunden sind, und dadurch, dass die Absaugvorrichtung (2) mindestens zwei Nippel (43, 44) umfasst, die aus dem Körper (20) der Vorrichtung herausragen und die jeweils mit den beiden Abgasauslässen (25, 26) verbunden sind.

11. WIG-Schweißbrenner nach einem der vorhergehenden Ansprüche, wobei die Absaugvorrichtung (2) abnehmbar ist oder der Körper (20) der Absaugvorrichtung mit dem Brenner eine einteilige geformte Baugruppe bildet.

## Claims

1. TIG welding torch (1) comprising a torch head (11) and a welding nozzle (13) which has a free end (13A), and a suction device (2) for removing smoke and/or particles during welding, the suction device (2) having a hollow body (20) which is rigidly connected to the torch head (11) and having an extension (21) provided with an end opening (23) and a free end (21A), the extension (21) surrounding the nozzle (13), which protrudes from the free end (21A) of the extension, **characterized in that** the extension (21) has a suitable length relative to the length of the nozzle (13) such that the distance between said free end (13A) of the nozzle and the free end (21A) of the extension (21) is between 8 and 15 mm.

2. TIG welding torch according to claim 1, wherein the distance between said free end (13A) of the nozzle and the free end (21A) of the extension (21) is 12 mm or 13 mm.

3. TIG welding torch according to either claim 1 or 2, wherein the radial distance between the outer wall of the nozzle (13) and the inner wall of the extension (21) is between 4 and 8 mm, preferably the radial distance is between 5 and 7 mm.

4. TIG welding torch according to any of the preceding claims, wherein the extension (21) has an outer circumferential surface (21B) which is beveled so as to converge toward the nozzle (13).

5. TIG welding torch according to any of the preceding claims, wherein the extension (21) forms a removable ring that is attached to the body (20) of the suction device.

6. TIG welding torch according to any of the preceding claims, wherein the extension (21) is made of a heat-resistant material, in particular a metal material or polytetrafluoroethylene (PTFE), preferably the extension (21) and the body (20) of the suction device are made of PTFE.

7. TIG welding torch according to any of the preceding claims, wherein the body (20) of the suction device is made of a material that is electrically insulating and resistant to heat, in particular to a temperature of approximately the welding temperature, such as approximately at least 200°C, in particular the body (20) being made of polytetrafluoroethylene (PTFE) or a phenoplast of the Bakelite or Celeron type.

8. TIG welding torch according to any of the preceding claims, wherein the body (20) of the suction device comprises at least one exhaust outlet (25, 26) arranged through the wall of the body, preferably two exhaust outlets (25, 26), in particular having a cross section of approximately 5 to 10 mm in diameter, in particular 6 mm in diameter.

9. TIG welding torch according to the preceding claim, the torch comprising means (4) for conveying smoke and/or particles, which means are connected to at least the exhaust outlet (25), preferably to two exhaust outlets (25, 26), in particular the conveying means (4) comprising at least one pipe (40), preferably two pipes (40, 41), in particular said pipes being made of a heat-resistant material such as silicone and/or rubber, the two pipes (40, 41) being connected to the two exhaust outlets (25, 26), respectively, and converging after a particular length to form a single end pipe (42) intended to be connected to a suction system (5), at least part of the conveying means (4) being intended to be integrated into a sheath corresponding to the harness for supplying electricity and gas to the torch for which said device is intended.

10. TIG welding torch according to either claim 8 or claim 9, wherein the torch comprises means (4) for conveying smoke and/or particles, which means are connected to two exhaust outlets (25, 26), and in that the suction device (2) comprises at least two sleeves (43, 44) that project outside the body (20) of said device and are connected to the two exhaust outlets (25, 26), respectively.

11. TIG welding torch according to any of the preceding claims, wherein the suction device (2) is removable or the body (20) of the suction device forms, together with the torch, a molded one-piece assembly.
